# EUROPEAN PATENT SPECIFICATION

(11) **EP 4 025 347 B1**
(45) Date of publication and mention of the grant of the patent: **19.02.2025**
(21) Application number: 20742491.2
(22) Date of filing: 03.07.2020
(51) Int. Cl.: B03C 1/033, B03C 1/28, B03C 1/035, B01D 35/06, F02M 37/22

(54) **MAGNETIC FILTER**
MAGNETISCHER FILTER
FILTRE MAGNÉTIQUE

(30) Priority: 05.09.2019 CZ 20190567
(43) Date of publication of application: 13.07.2022
(73) Proprietor: MPM Catcher S.R.O., 32200 Plzen (CZ)
(72) Inventor: HOUDEK, Petr, 32200 Plzen (CZ)
(74) Representative: Novotny, Jaroslav
(86) International application number: PCT/IB2020/056296
(87) International publication number: WO 2021/044225

(56) References cited:
- EP-A1- 0 348 551
- DE-B1- 1 794 280
- US-A- 5 882 514
- US-A1- 2012 255 519

## Description

### Technical Fields

The invention concerns a magnetic filter for fuel and hydraulic systems to remove metallic impurities, in particular shavings, to be used in fuel systems in the automotive industry on common-rail systems and in hydraulic systems to the full extent of their industrial application.

### Background Arts

A majority of closed circuits filled with liquid are fitted with a mechanical or otherwise active filter through which the liquid flows and by which undesirable substances that could damage other components of the closed circuit are eliminated.

Within the framework of mechanical non-active filters, solutions restricting the free flow of liquid through the system that allow undesirable mechanical particles present in the liquid to be entrapped are concerned. In the segment of the automotive industry, a solution of the fuel filter in the fuel circuit system that filters fuel coming from the fuel tank is known to remove solid particles and sediments that would otherwise enter the motor that could thus be damaged. Such filters are found in a majority of motors with internal combustion. Such fuel filters have usually the shape of a cylindrical case with an insert made of paper material and they in particular prevent impurities present in the fuel from damaging the downstream components of the fuel system and consequently the entire motor. A disadvantage of this solution is an insufficient entrapment of metallic shavings that go through the paper filter either due to their small size or because they cut through the paper filter. Shavings can be generated, for example, in the fuel system of Diesel vehicles due to low-quality Diesel oil which then poorly lubricates the fuel feed pump in the fuel tank, which results in high friction. The fuel feed pump starts producing invisible metallic shavings which then wear the highpressure pump that will start generating other metallic particles as well. Such tiny metallic particles go through the fuel filter due to their miniature size and enter fuel injectors that will thus become irreversibly damaged. The injectors then fail to feed a sufficient quantity of fuel and the vehicle will become inoperable. The unfavourable consequences of impurities and sediments can be partially mitigated by the application of additives and products designed to clean the system that are able to dissolve solid deposits in the fuel system, carbon in the injection system and exhaust system without the necessity to dismantle any components of the motor. Mechanically inactive filters can also be found in hydraulic systems where among the most frequently used are strainer, slot or other porous filters.

In addition, a number of technical solutions for active filters utilizing magnetic force are available. In a majority of cases, magnetic filters that are positioned onto heating and cooling systems with circulating water are concerned. Such filters are fitted with a strong permanent magnet separating impurities comprising in particular sand, rust particles and shavings and are also fitted with a filtering sieve to separate other impurities as well. This type of solution is able to capture metallic particles of smaller sizes and functions in environments comprising liquids of lower densities, i.e. for example in aqueous environments. In addition, there are industrial separators operating on the basis of neodymium magnets with/without a separation container representing solutions that can be utilized in hall-based technical plants, i.e. whose sizes are larger than one meter and a number of whom require external power supply.

In the state-of-the-art area, for example, the following Czech patent specifications have been found Nos. 76117, 162391, 116387, 135161, and the Czech utility model with the registration number 26000, which together cover the separation of impurities in liquids. These solutions mostly require a large installation space and due to their internal design, they do not much decelerate the flow of liquid through the filter and consequently are not able to attain a very high efficiency of cleaning. In addition, the state of the art includes the Japanese patent JP 2007-75808A that is used as a standard, sheet-metal oil filter for vehicles. It filters out foreign particles and sludge from the motor lubrication oil. In addition, it includes a magnetized strainer made of stainless steel. Due to its size and imperfect arrangement, it cannot be used in limited spaces, in particular in fuel systems of vehicles. Moreover, the solution is not able to clean vehicle fuel from the finest impurities without requirement for external power supply.

Devices using a spiral and magnets are known, e.g. DE 17 94 280 B1 and US 2012/255519 A1, but disadvantage of DE 17 94 280 B1 is risk of damage of car engine due to design flaws. DE1794280B1 discloses a magnetic filter according to the preamble of the independent claim 1.

US 2012/255519 A1 works as fuel safe application with no function to catch any particles from fuel.

The task of the inventor was to develop a solution that would be applicable in a demanding environment in terms of space, i.e. which would allow installation in already existing limited spatial conditions, in particular the fuel systems of vehicles, and which would also be able to clean the systems from the finest metallic impurities without requiring external power supply.

### Disclosure of Invention

These above mentioned drawbacks are eliminated by the magnetic filter consisting of an external case, separator, and magnet according to the present invention, which is based on the fact that the separator has at least one spiral coil situated in its internal case and that a magnet site containing the magnet is situated in the centre of the separator. The magnet site comprises openings through which metallic impurities are entrapped by the magnet.

### Preferably,

the spiral coil surface is roughened by indenting.

Compared to the state of the art, the magnetic filter according to the present invention has several advantages. In addition to the high efficiency in cleaning liquids from metallic impurities, in particular small dimensions of the technical solution itself and the resulting low demands for installation space are concerned. The invention is characterized by low manufacturing costs compared to those related to the repair of damaged motor components and also by quick assembly onto the existing fuel systems.

The principle behind the functioning and high efficiency of the invention is the rotational motion of liquid provided by the spiral coil around the magnet. Thanks to its rotation around the magnet, the flow of liquid is slowed down thus allowing magnetic force to act in a more efficient way over a longer period of time on the liquid and metallic shavings present in it. The magnet used in the invention and placed in the site reserved for magnets has its polarity distributed in a sandwich-like manner along its entire length. Therefore, it acts on the liquid over the entire period of its rotational motion through the separator and its spiral coil designed to entrap metallic shavings.

### Brief Description of Drawings

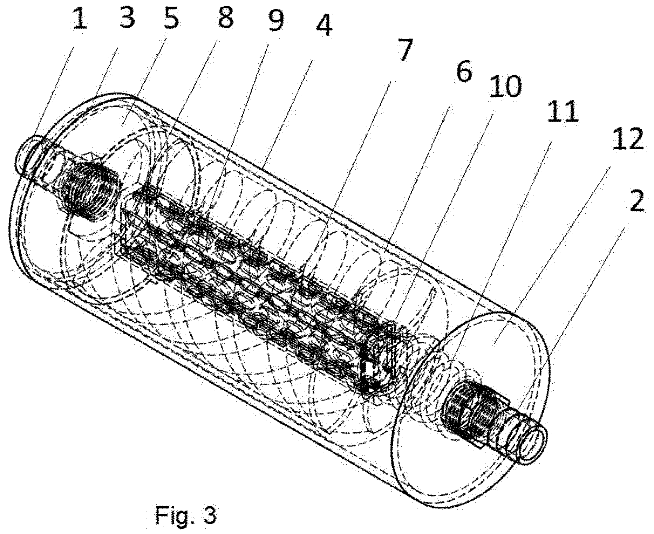

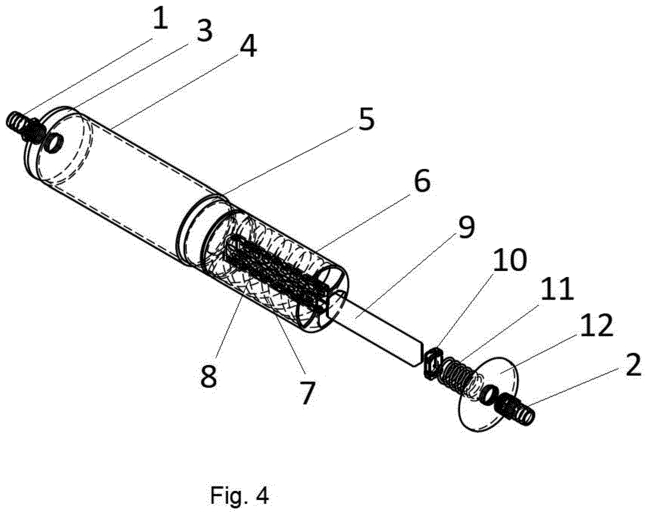

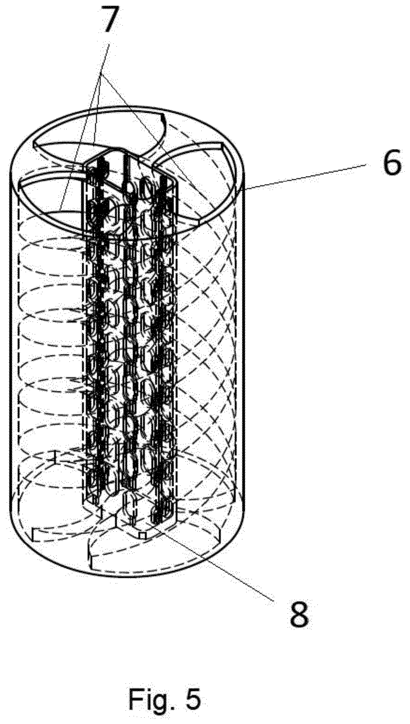

The invention will be explained in detail by the drawing where Fig. 1 provides the exploded view of the magnetic filter if its individual components are viewed from the side, Fig. 2 provides the assembled view of the magnetic filter if viewed from the side, Fig. 3 shows the axonometric view of the magnetic filter in its assembled state, and Fig. 4 shows the axonometric view of the exploded magnetic filter. Fig. 5 shows the separator with three spiral coils.

### Made for Carrying out the Invention

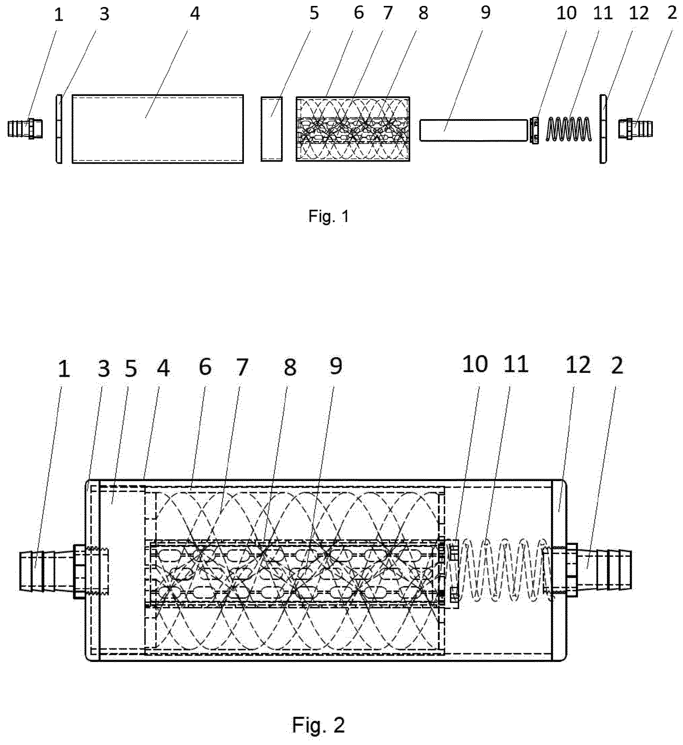

The magnetic filter in the assembled state as per Fig. 2 consisting of the hose adapter 2 located at the inlet of the lid 12, external case 4, lid 3 of the external case 4 with the hose adapter 1 at the outlet. In the assembled state, the case 4 contains the embedded separator 6, along the internal perimeter of which at least one spiral coil 7 is situated. The centre of the separator 6 includes one perforated site 8 of the magnet 9, in whose bed the magnet 9 is situated. The magnet 9 is closed in the site 8 of the magnet 9 by the lid 10 of the site 8 of the magnet 9. The separator 6 is positioned in the external case 4 in a manner delimited by the set spring 11 at the inlet of liquid on one side and by the spacer ring 5 at the outlet of liquid.
The magnet 9 has its polarity distributed in a sandwich-like manner, i.e. the positive and negative poles extend along the entire length of the magnet 9.

### Example 1

In the fuel system, gas, prior to passing the fixed fuel filter, flows through the hose adapter 2 at the inlet of the internal space of the stainless-steel case 4, where in the space of the set spring 11 it is divided into three spiral coils 7 forming the internals of the separator 6 made of ABS plastic material. In the middle of the separator 6, the perforated site 8 of the magnet 9, inside which the neodymium magnet 9 is placed, is positioned. Gas flows through the three spiral coils 7 around the site 8 of the magnets 9. Thanks to the circular movement of the gas around the site 8 of the magnet 9 by the spiral coils 7, which are situated along the entire internal perimeter of the case of the circular separator 6, the magnetic force of the magnet 9 entraps metallic shavings present in the gas. Magnetic shavings are entrapped by the magnet 9 through the openings in the site 8 of the magnet 9. Some impurities are entrapped on the surface of the site 8, others go through the openings as far as the magnet 9. The purified gas, after passing through the three spiral coils 7, is mixed again into one flow in the space of the spacer ring 5, leaves the magnetic filter through the hose adapter 1 at the outlet and flows further through the fuel system towards the solid paper filter and towards the motor.

### Example 2

In the fuel system, Diesel oil, prior to passing the fixed fuel filter, flows through the hose adapter 2 at the inlet of the internal space of the external stainless-steel case 4, where in the space of the set spring 11 it is divided into two spiral coils 7 forming the internals of the separator 6 made of stainless steel. In the middle of the separator 6, the perforated site 8 of the magnet 9, inside which the ferrite magnet 9 is placed, is positioned. Diesel oil flows through the two spiral coils 7 around the site 8 of the magnets 9. Thanks to the circular movement of the Diesel oil around the site 8 of the magnet 9 in the spiral coils 7, which are situated along the entire internal perimeter of the case of the circular separator 6, the magnetic force of the magnet 9 entraps metallic shavings present in the Diesel oil. Magnetic shavings are entrapped by the magnet 9 through the openings in the site 8 of the magnet 9. Some impurities are entrapped on the surface of the site 8, others go through the openings as far as the magnet 9. The spiral coils 7 have indented surface that slows down the flow of Diesel oil through the separator and creates vortices, making it easier for metallic shavings to get entrapped in the site 8 of the magnet 9, or on the magnet 9 itself. The purified Diesel oil, after passing through the two spiral coils 7, is mixed again into one flow in the space of the spacer ring 5, leaves the magnetic filter through the hose adapter 1 at the outlet and flows further through the fuel system towards the solid paper filter and towards the motor.

### Example 3

In the fuel system, Diesel oil, prior to passing the fixed fuel filter, flows through the hose adapter 2 at the inlet of the internal space of the external stainless-steel case 4, where, after passing through the space of the set spring 11, it flows into one spiral coil 7 forming the internals of the separator 6 made of ABS plastic material. In the middle of the separator 6, the perforated site 8 of the magnet 9, inside which the neodymium magnet 9 is placed, is positioned. Diesel oil flows through one spiral coil 7 around the site 8 of the magnets 9. Thanks to the circular movement of the Diesel oil around the site 8 of the magnet 9 in the spiral coil 7, which is situated along the entire internal perimeter of the case of the circular separator 6, the magnetic force of the magnet 9 entraps metallic shavings present in the Diesel oil. Magnetic shavings are entrapped by the magnet 9 through the openings in the site 8 of the magnet 9. Some impurities are entrapped on the surface of the site 8 of the magnet 9, others go through the openings as far as the magnet 9. The purified Diesel oil, after passing through one spiral coil 7 after passing through the space of the spacer ring 5, leaves the magnetic filter through the hose adapter 1 at the outlet and flows further through the fuel system towards the solid paper filter and towards the motor.

### Example 4

In the hydraulic circuit, excessive oil flows through the safety by-pass valve to the manifold, where, along its way back to the oil tank, it flows through the hose adapter 2 at the inlet of the internal space of the external stainless-steel case 4, where in the space of the set spring 11 it is divided into three spiral coils 7 forming the internals of the separator 6 made of ABS plastic material. In the middle of the separator 6, the perforated site 8 of the magnet 9, inside which the neodymium magnet 9 is placed, is positioned. Oil flows through the three spiral coils 7 around the site 8 of the magnets 9. Thanks to the circular movement of the oil around the site 8 of the magnet 9 in the spiral coils 7, which are situated along the entire internal perimeter of the case of the circular separator 6, the magnetic force of the magnet 9 entraps metallic shavings present in the oil. Magnetic shavings are entrapped by the magnet 9 through the openings in the site 8 of the magnet 9. Some impurities are entrapped on the surface of the site 8, others go through the openings as far as the magnet 9. The purified oil, after passing through the three spiral coils 7, is mixed again into one flow in the space of the spacer ring 5, leaves the magnetic filter through the hose adapter 1 at the outlet and flows further towards the oil tank from where it is then pumped by the pump back to the system.

### Industrial Applicability

The magnetic filter can be used in particular in the automotive or engineering industries where the elimination of metallic impurities from fuel systems of passenger as well as goods-carrying vehicles will prevent significant damage to the components of the motor, which work with accuracy in the order of millimetres, and with hydraulic systems, damage of the hydrostatic mechanism and its components will be eliminated.

### Reference Signs List

1 hose adapter at the outlet
2 hose adapter at the inlet
3 lid of the case at the outlet
4 external case
5 spacer ring
6 separator
7 spiral coil
8 site of the magnet
9 magnet
10 lid of the site of the magnet
11 set spring
12 lid of the case at the inlet

## Claims

1. Magnetic filter for removing metallic impurities, the magnetic filter consisting of an external case (4), a separator (6), and a magnet (9), wherein the separator (6) is fitted in its internal case with at least one spiral coil (7), wherein a magnet site (8) containing the magnet (9) is situated in the centre of the separator (6) **characterized in that** the magnet site (8) comprises openings through which metallic impurities are entrapped by the magnet (9).

2. Magnetic filter according to claim 1, **characterized in that** the spiral coil (7) has its surface roughened by indenting.

## Patentansprüche

1. Magnetfilter zur Entfernung metallischer Verunreinigungen, bestehend aus einem Außengehäuse (4), einem Abscheider (6) und einem Magneten (9), wobei der Abscheider (6) in seinem Innengehäuse mit mindestens einer Spiralspule (7) ausgestattet ist, wobei sich eine Magnetstelle (8), die den Magneten (9) enthält, im Zentrum des Abscheiders (6) befindet, **dadurch gekennzeichnet, dass** die Magnetstelle (8) Öffnungen enthält, durch die metallische Verunreinigungen durch den Magneten (9) eingefangen werden.

2. Magnetfilter nach Anspruch 1, **dadurch gekennzeichnet, dass** die Oberfläche der Spiralspule (7) durch Einbuchtung aufgeraut ist.

## Revendications

1. Filtre magnétique pour éliminer les impuretés métalliques, le filtre magnétique consistant en un boîtier externe (4), un séparateur (6) et un aimant (9), où le boîtier interne du séparateur (6) est équipé d'au moins une bobine en spirale (7), dans laquelle se trouve une zone magnétique (8) contenant l'aimant (9) le centre du séparateur (6) **caractérisé en ce que** la zone magnétique (8) comprend des ouvertures par lesquelles des impuretés métalliques sont emprisonnées par l'aimant (9).

2. Filtre magnétique selon la revendication 1, **caractérisé en ce que** la bobine en spirale (7) a sa surface rugueuse par échancrure.
